# EUROPEAN PATENT SPECIFICATION

(11) **EP 1 873 415 B1**
(45) Date of publication and mention of the grant of the patent: **26.10.2011**
(21) Application number: 07012533.1
(22) Date of filing: 26.06.2007
(51) Int. Cl.: F16D 41/07

(54) **One-way clutch**
Einwegkupplung
Embrayage à roue libre

(30) Priority: 28.06.2006 JP 2006177744; 30.11.2006 JP 2006323764
(43) Date of publication of application: 02.01.2008
(73) Proprietor: JTEKT Corporation, Osaka-shi Osaka 542-8502 (JP)
(72) Inventor: Yamane, Shinji, Osaka-shi, Osaka 542-8502 (JP); Maeda, Toshiyuki, Osaka-shi, Osaka 542-8502 (JP); Gouda, Norikazu, Osaka-shi, Osaka 542-8502 (JP)
(74) Representative: Schaeberle, Steffen

(56) References cited:
- DE-A1- 10 124 740
- JP-A- 2006 097 726

## Description

### BACKGROUND OF THE INVENTION

### 1. Field of the Invention

The present invention relates to a one-way clutch which is used in an environment of lubricating oil containing molybdenum.

### 2. Related Art

Conventionally, there has been known a one-way clutch i.e. in JP 2006-097726 which includes an inner ring, an outer ring, a plurality of sprags arranged between these inner and outer rings, and a cage for holding these sprags at a predetermined interval in a circumferential direction. In this one-way clutch, the outer ring and the inner ring will be rotated in one direction relative to each other, whereby the sprags will be engaged with the inner and the outer rings between them to transmit a driving power. In case where the outer ring and the inner ring are rotated in the opposite direction relative to each other, engagement of the sprags will be released, and the sprags will idly rotate between the inner and the outer rings, whereby transmission of the driving power will be interrupted.

In the one-way clutch of this type, SUJ2 which is bearing steel, for example, has been heretofore used as material for the sprags (Reference should be made to Japanese Utility Model Publication No. JP-A-H06-47740U, for example).

It has been confirmed that in case where the conventional one-way clutch is used in an environment of engine oil, for example, coefficient of friction between the sprags made of SUJ2 and the inner and outer rings becomes extremely small, under influence of organic molybdenum which is contained in the engine oil as friction adjusting agent. It has been considered that this is because molybdenum disulfide which has been generated becomes likely to adhere to surfaces of the sprags, which will lower the coefficient of friction. For this reason, there has been such anxiety that slips may occur between the sprags and the inner and outer rings, and engaging performance of the sprags may be deteriorated, which will result in a short useful life of the one-way clutch.

### SUMMARY OF THE INVENTION

In view of the above, an object of the invention is to provide a one-way clutch in which deterioration of engaging performance between sprags and inner and outer rings can be restrained, even though the one-way clutch is used in an environment of lubricating oil containing molybdenum.

In order to attain the above describedobj ect, there is provided, according to the invention, a one-way clutch including an inner ring made of steel, an outer ring made of steel, a plurality of sprags made of steel and arranged between these inner and outer rings, and a cage which holds these sprags at a predetermined interval in a circumferential direction, the one-way clutch being used in an environment of lubricating oil containing molybdenum, characterized in that a chrome content in steel which is material for the sprags is 1.2 weight % or less.

According to this feature, molybdenum disulfide which will be generated will be unlikely to adhere to surfaces of the sprags, and lowering of coefficient of friction between the sprags and the inner and outer rings can be restrained. Therefore, it is possible to restrain deterioration of engaging performance between the sprags and the inner and outer rings.

Moreover, in the above described one-way clutch, it would be preferable that the chrome content in steel which is the material for the sprags is 0.30 weight % or less, and a hardness of the sprags on their contact faces with respect to the inner ring and the outer ring is from HRC50 to HRC62.5.

According to this feature, molybdenum disulfide which will be generated will be more unlikely to adhere to the surfaces of the sprags, and lowering of the coefficient of friction between the sprags and the inner and outer rings can be restrained. Therefore, it is possible to more effectively restrain deterioration of the engaging performance between the sprags and the inner and outer rings. Moreover, because the hardness of the sprags on their contact faces is HRC50 or more, it is possible to restrain useful life of the one-way clutch from being shortened due to high face pressure which will be created between the sprags and the inner and outer rings. Further, because the hardness is HRC62.5 or less, practically sufficient hardness can be obtained.

Further, in the above described one-way clutch, it would be preferable that the sprags are made of carbon steel for mechanical structure or carbon tool steel.

According to this feature, it is possible to realize a favorable one-way clutch in terms of the chrome content in steel which is the material for the sprags and the hardness of the sprags on their contact faces, for the purpose of restraining lowering of the coefficient of friction between the sprags and the inner and outer rings.

Still further, in the above described one-way clutch, it would be preferable that the chrome content in steel which is material for the inner ring and the outer ring is 0.30 weight % or less, and a hardness of the inner ring and the outer ring on their contact faces with respect to the sprags is from HRC50 to HRC62.5.

According to this feature, molybdenum disulfide which will be generated will be more unlikely to adhere to surfaces of the inner and outer rings, and lowering of the coefficient of friction between the sprags and the inner and outer rings can be restrained. Therefore, it is possible to more effectively restrain deterioration of the engaging performance between the sprags and the inner and outer rings. Further, because the hardness of the inner and outer rings on their contact faces is HRC50 or more, it is possible to restrain the useful life of the one-way clutch from being shortened due to high face pressure which will be created between the sprags and the inner and outer rings. Further, because the hardness is HRC62.5 or less, practically sufficient hardness can be obtained.

Still further, in the above described one-way clutch, it would be preferable that the inner ring and the outer ring are made of carbon steel for mechanical structure or carbon tool steel.

According to this feature, it is possible to realize a favorable one-way clutch in terms of the chrome content in steel which is the material for the inner and outer rings and the hardness of the inner ring and the outer ring on their contact faces, for the purpose of restraining lowering of the coefficient of frictionbetween the sprags and the inner and outer rings.

Still further, in the above described one-way clutch which is used in the environment of the lubricating oil containingmolybdenum and in which the chrome content in steel which is the material for the sprag is 1.2 weight % or less, it would be preferable that a chrome content in steel which is material for the inner ring and the outer ring is 1.2 weight % or less.

According to this feature, molybdenum disulfide will be unlikely to adhere to an outer peripheral face of the inner ring and an inner peripheral face of the outer ring too, and lowering of the coefficient of friction between the sprags and the inner and outer rings can be restrained. Therefore, it is possible to more effectively restrain deterioration of the engaging performance between the sprags and the inner and outer rings.

Still further, in the above described one-way clutch, it would be preferable that the hardness of the sprags and the inner and outer rings on respective contact faces between them is Hv700 or more.

According to this feature, it is possible to prolong the useful life of the one-way clutch, although high face pressure is usually generated between the sprags and the inner and outer rings.

According to this invention, molybdenum disulfide which will be generated will be unlikely to adhere to the surfaces of the sprags, and lowering of the coefficient of friction between the sprags and the inner and outer rings canbe restrained. Therefore, it is possible to restrain deterioration of the engaging performance between the sprags and the inner and outer rings.

### BRIEF DESCRIPTION OF THE DRAWINGS

Fig. 1 is a side view showing an embodiment of a one-way clutch according to the invention.
Fig. 2 is a view showing an essential part of the one-way clutch in Fig. 1.
Fig. 3 is a view showing a contact area between a sprag and an inner ring for explaining conditions for engagement.
Fig. 4 is a graph showing relation of coefficient of friction between a first coefficient of friction measuring jig corresponding to the sprag and a second coefficient of friction measuring jig corresponding to the inner and outer rings, with respect to chrome content in steel which is material for the jigs, wherein the chrome content in steel of the first coefficient of friction measuring jig are varied.
Fig. 5 is a graph showing relation of coefficient of friction between the first coefficient of friction measuring jig corresponding to the sprag and the second coefficient of friction measuring jig corresponding to the inner and outer rings, with respect to the chrome content in steel which is material for the jigs, wherein the chrome contents in steel of both the first coefficient of friction measuring jig and the second coefficient of friction measuring jig are varied.
Fig. 6 is a table showing results of friction endurance tests which have been made on the one-way clutch according to the invention and the conventional one-way clutch.

### DETAILED DESCRIPTION OF THE PREFERRED EMBODIMENTS

Now, an embodiment of the invention will be described referring to the drawings.

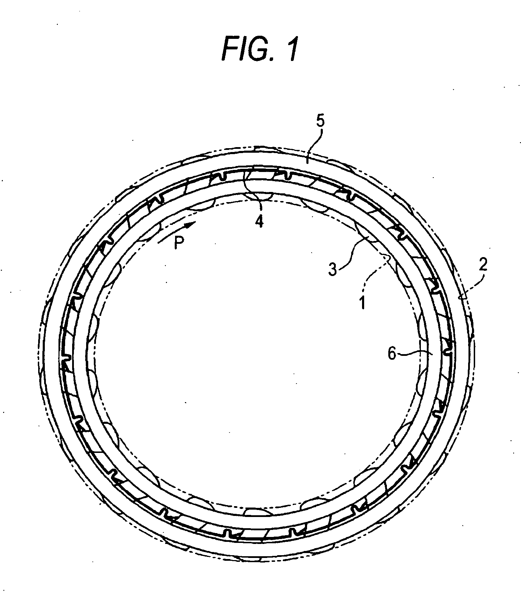

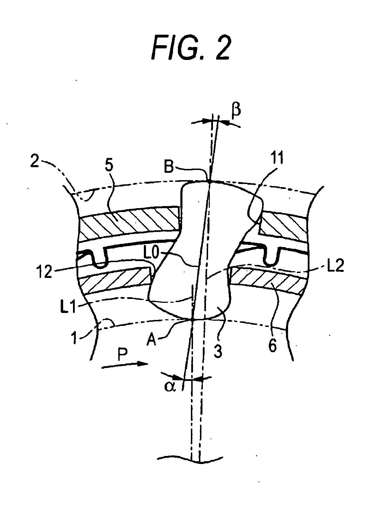

Fig. 1 is a side view showing an embodiment of a one-way clutch according to the invention, and Fig. 2 is a view showing an essential part of this one-way clutch. This one-way clutch includes an inner ring 1 made of steel, an outer ring 2 made of steel, a plurality of sprags 3 made of steel and arranged between the inner and outer rings 1, 2 in a circumferential direction, an outer cage 5 and an inner cage 6 which hold these sprags 3 at a predetermined interval in the circumferential direction, and a spring 4 for urging the sprags 3 against the inner ring 1 and the outer ring 2 in a direction of engagement. In case where the inner ring 1 rotates in one direction (the direction of an arrow mark P) relative to the outer ring 2, the sprags 3 will be engaged with the inner and outer rings 1, 2 thereby to transmit a driving power, and in case where the inner ring 1 rotates in the opposite direction relative to the outer ring 2, the engagement of the sprags 3 will be released, whereby transmission of the driving power will be interrupted.

The outer cage 5 is formed in an annular shape and fixed to the outer ring 2. A plurality of pockets (holes) 11 are formed in this outer cage 5 at a predetermined interval in the circumferential direction (See Fig. 2). The sprags 3 are respectively retained in these pockets 11 at outward positions thereof in a radial direction.

The inner cage 6 in an annular shape is provided inside the outer cage 5 in the radial direction. A plurality of pockets (holes) 12 are formed in this inner cage 6 at a predetermined interval in the circumferential direction. The sprags 3 are respectively retained in these pockets 12 at inward positions thereof in the radial direction. According to this structure, when the inner ring 1 rotates in a direction opposite to the direction of the arrow mark P, the outer cage 5, the sprags 3, and the inner cage 6 will be in a state retained by the outer ring 2, and the inner ring 1 will idly rotate relative to the outer ring 2.

In Fig. 2, the pockets 11 in the outer cage 5 and the pockets 12 in the inner cage 6 are formed different in phase from each other so that the sprags 3 may be in an inclined posture. Provided that a rectilinear line which connects a contact point A between the sprag 3 and the inner ring 1 and a contact point B between the sprag 3 and the outer ring 2 is L0, there is a strut angle α of a predetermined value between this rectilinear line L0 and a normal L1 at the contact point A. On the other hand, there is a strut angle *β* of a predetermined value between the rectilinear line L0 and a normal L2 at the contact point B.

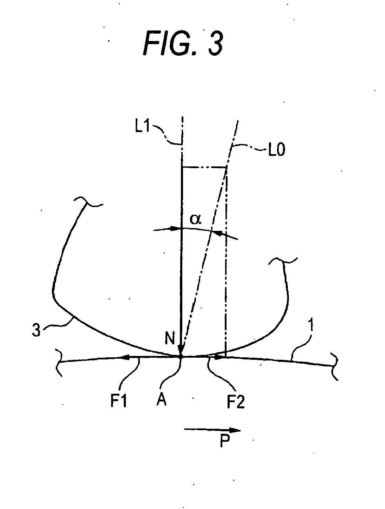

Fig. 3 is a view showing a contact area between the sprag 3 and the inner ring 1 for explaining conditions of engagement. In order that the sprag 3 may be engaged with the inner ring 1 and a slip may not occur, a friction force F1 between the sprag 3 and the inner ring 1 must be larger than a rotation force F2 which is generated in a tangent direction at the contact point A at a time of engagement (F1>F2), in Fig. 3. Specifically, provided that a force in a direction of the normal L1 generated at the contact point A at the time of engagement between the sprag 3 and the inner ring 1 is N, and a coefficient of friction of the contact point A is *µ*, it is necessary to satisfy *µ*N>Ntan*α*, in order that the sprag 3 may be engaged with the inner ring 1 and a slip may not occur.

In short, it is necessary to satisfy *µ*>tan*α* for the purpose of avoiding a slip, according to this formula. In this embodiment, because the strut angle α is constant, a value of tan *α* is constant. In case where the coefficient of friction *µ* becomes small, the above described formula for the condition of engagement will not be satisfied, and a slip will occur between the sprag 3 and the inner ring 1, whereby the engagingperformance will be deteriorated. Also between the sprag 3 and the outer ring 2 (the contact point B), it is necessary to satisfy *µ*>tan*β*, in order that the sprag 3 may be engaged with the outer ring 2 and a slip may not occur, in the same manner as at a side of the inner ring 1 (the contact point A). Therefore, for the purpose of securing the engaging performance between the sprag 3 and the inner and outer rings 1, 2, it is necessary to prevent the coefficient of friction µ from becoming small.

Particularly, in case where the one-way clutch is used in an environment of the lubricating oil containing molybdenum (organic molybdenum), that is, in the environment of the engine oil, it has been confirmed that the coefficient of friction µ becomes small between the sprag 3 and the inner and outer rings 1, 2, under the influence of the organic molybdenum, because the engine oil contains the organic molybdenum as the friction adjusting agent.

In view of the above, according to this invention, a chrome content in steel which is the material for the sprag 3 is set to be 1.2 weight % or less. It would be preferable that the specific material includes either of carburizing steel such as chrome steel (SCr), chrome molybdenum steel (SCM), nickel chrome molybdenum steel (SNCM), carbon tool steel (SK), and carbon steel for mechanical structure (S45C or the like).

Particularly, the chrome content in steel which is the material for the sprag 3 is preferably 0.30 weight % or less.

Further, a chrome content in steel which is the material for the inner ring 1 and the outer ring 2 too is more preferably 1.2 weight % or less. Specific material for the inner and outer rings 1, 2 is the same as the material for the sprag 3.

Also in the inner ring 1 and the outer ring 2, the chrome content in steel which is the material for the inner ring 1 and the outer ring 2 is preferably 0.30 weight % or less.

Because the chrome content in the sprag 3 is 0 to 1.2 weight %, molybdenum disulfide which will be generated will be unlikely to adhere to the surface of the sprag 3, even in case where the one-way clutch is used in the environment of the lubricating oil containing molybdenum. In this manner, lowering of the coefficient of friction µ between the sprag 3 and the inner and outer rings 1, 2 canbe restrained, and deterioration of engaging performance between the sprag 3 and the inner and outer rings 1, 2 can be restrained.

Further, in case where the chrome content in steel which is the material for the sprag 3 is 0.30 weight %, molybdenum disulfide which will be generated will be more unlikely to adhere to the surface of the sprag 3, and lowering of the engaging performance between the sprag 3 and the inner and outer rings 1, 2 can be more effectively restrained.

Because the chrome content in the inner ring 1 and the outer ring 2 is 0 to 1.2 weight %, molybdenum disulfide which will be generated will be unlikely to adhere to an outer peripheral face of the inner ring 1 and an inner peripheral face of the outer ring 2. In this manner, lowering of the coefficient of friction *µ* between the sprag 3 and the inner and outer rings 1, 2 can be restrained, and deterioration of the engaging performance can be more effectively restrained.

Further, in case where the chrome content in steel which is the material for the inner ring 1 and the outer ring 2 is 0.30 weight % or less, molybdenum disulfide which will be generated will be more unlikely to adhere to the surfaces of the inner ring 1 and the outer ring 2, and deterioration of the engaging performance between the sprag 3 and the inner and outer rings 1, 2 can be more effectively restrained.

Further, it would be preferable that the chrome content in steel which is the material for the sprag 3 is 0.3weight % or less, and that a hardness of the sprag 3 on a contact face with the inner ring 1 and the outer ring 2 is from HRC50 to HRC62.5. Moreover, it would be preferable that the chrome content in steel which is the material for the inner ring 1 and the outer ring 2 is 0.30 weight % or less, and that a hardness of the inner ring 1 and the outer ring 2 on their contact faces with the sprag 3 is from HRC50 to HRC62.5.

When the sprag 3 is engaged with the inner and outer rings 1, 2, high face pressure will be generated. However, by setting the hardness of the contact faces of the sprag 3, the inner ring 1 and the outer ring 2 to be HRC50 or more, it is possible to restrain the useful life of the one-way clutch frombeing shortened. Moreover, by setting the hardness to be HRC62.5 or less, molybdenum disulfide becomes likely to be easily removed even though molybdenum disulfide has adhered to the contact faces of the sprag 3 and the inner and outer rings 1, 2, and hence, lowering of the coefficient of friction between the sprags 3 and the inner and outer rings 1, 2 can be more effectively restrained. This is based on such conjecture that even though molybdenum disulfide has adhered to the contact faces of the sprag 3 and the inner and outer rings 1,2, abrasion tends to proceed on the respective contact faces within a range having no practical problem, by setting the hardness to be HRC62.5 or less, and molybdenum disulfide will be likely to be removed along with this abrasion.

Suitable material for the sprag 3 in which the chrome content is 0.30 weight % or less and the hardness on the contact face is from HRC50 to HRC62.5 is carbon steel, specifically, carbon steel for mechanical structure or carbon tool steel. The material for the inner ring 1 and the outer ring 2 in which the chrome content is 0.30 weight % or less and the hardness on the contact faces is from HRC50 to HRC62.5 is also carbon steel for mechanical structure or carbon tool steel, in the same manner as in the sprag 3. Further, in case where carbon steel for mechanical structure or carbon tool steel is employed, carbon content is preferably from 0.45 % to 1. 6 %.

Favorable examples of carbon steel for mechanical structure are specifically S45C, S50C, and S55C. In this case, the chrome content is 20 weight % or less. Further, a favorable example of carbon tool steel is specifically SK5, for example.

When the sprag 3 is engaged with the inner and outer rings 1, 2, high face pressure will be generated. However, the hardness of the sprag 3 on the contact face with the inner ring 1, and the hardness of the sprag 3 on the contact face with the outer ring 2 are set to be Hv700 or more by conducting a hardening heat treatment. In this manner, it is possible to prolong the useful life of the one-way clutch, even though the high face pressure has been generated. Specifically, it would be sufficient that the hardness of the sprag 3 on the contact faces with the inner and outer rings 1, 2 may be Hv700 or more, and the hardness of the outer peripheral face of the inner ring 1 and the inner peripheral face of the outer ring 2 may be Hv700 or more.

Specifically, in the one-way clutch according to the invention, the hardness of the sprag 3 on the contact face with the inner ring 1 and the hardness of the sprag 3 on the contact face with the outer ring 2 have been described as from HRC50 to HRC62.5. However, it would be preferable that this lower threshold value is particularly Hv700 or more (nearly equal to HRC60).

Moreover, in the one-way clutch according to the invention, the chrome content in steel which is the material for the sprag 3 can be 1.2 weight % or less, and the hardness of the respective contact faces between the sprag 3 and the inner and outer rings 1, 2 can be Hv700 or more. Further, in this one-way clutch, it would be preferable that the chrome content in steel which is the material for the inner ring 1 and the outer ring 2 is 1.2 weight % or less.

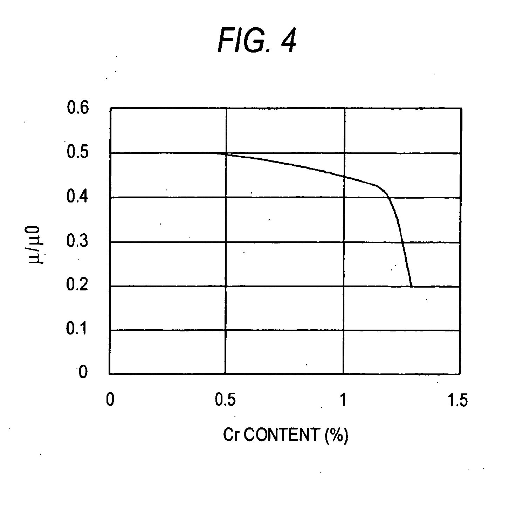

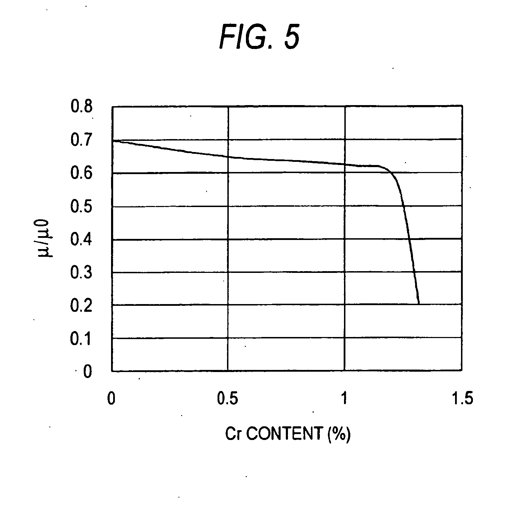

Figs. 4 and 5 are graphs showing relation of coefficient of friction between a first coefficient of friction measuring jig (not shown) corresponding to the sprag 3 and a second coefficient of friction measuring jig (not shown) corresponding to the inner and outer rings 1, 2, with respect to the chrome content in steel which is the material for the jigs. In Fig. 4, the chrome content in steel of the first coefficient of friction measuring jig is varied, and in Fig. 5, the chrome contents in steel of both the first coefficient of friction measuring jig and the second coefficient of friction measuring jig are varied. In these graphs, *µ* is a coefficient of friction which has been measured in an environment of the lubricating oil containing molybdenum, and µ 0 is a coefficient of frictionwhichhas beenmeasured in an environment of the lubricating oil not containing molybdenum.

In Fig. 4, as for the sprag 3 (the first coefficient of friction measuring jig), the conventional material for the sprag (the chrome content in steel is from 1.3 to 1.6 weight %) has an extremely small ratio of *µ*/*µ*0 (in case of 1.3 weight %, the ratio is 0.2). However, in case where the chrome content is reduced as in the sprag 3 in this invention (the chrome content of is 1.2 weight % or less), the ratio *µ*/*µ*0 becomes larger (the ratio will be 0.4 or more).

Further, in Fig. 5, in case where the chrome contents in both the sprag 3 (the first coefficient of friction measuring jig) and the inner and outer rings 1, 2 (the second coefficient of friction measuring jig) are reduced (1.2 weight % or less), the ratio becomes further larger (the ratio will be 0.6 or more) . As the results, it is possible to obtain such advantage that the coefficient of friction between the first and second jigs will be much more increased.

In other words, in case where the chrome content in steel which is the material for the sprag 3 is 1.2 weight % or less, and in case where the chrome content in steel which is the material for the inner and outer rings 1, 2 is 1.2 weight % or less, the engaging performance can be more enhanced than ever, and engaging life can be prolonged. As the results, according to the invention, the one-way clutch having high quality and high reliability can be obtained.

The larger a size of the one-way clutch is, the higher the performance of the engaging life will be. Because the performance of the engaging life can be enhanced according to the invention, the one-way clutch which satisfies the desired performance of the engaging life can be made smaller than what has been required in the conventional one-way clutch. In this manner, it is possible to reduce production cost for the one-way clutch and the device provided with the one-way clutch, and reduction in weight can be also attained.

In Fig. 4, in case where the chrome content in the sprag 3 (the first coefficient of friction measuring jig) is 0.30 weight % or less, the ratio *µ*/*µ*0 becomes larger (the ratio will be 0.5 or more). Further, in Fig. 5, in case where the chrome content in both the sprag 3 (the first coefficient of friction measuring jig) and the inner and outer rings 1, 2 (the second coefficient of friction measuring jig) is reduced to 0.3 weight % or less, the ratio *µ*/*µ*0 becomes further larger (the ratio will be 0.67 or more). As the results, it is possible to obtain such advantage that the coefficient of friction between the first and second jigs will be much more increased.

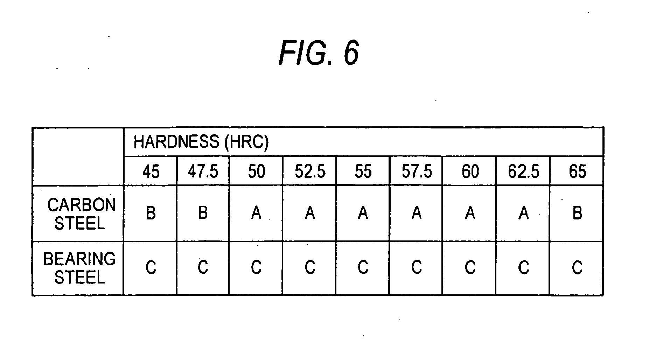

Fig. 6 shows results of friction endurance tests which have been made on the one-way clutch according to this invention (the embodiment) and the conventional one-way clutch. In the embodiment, the material for the sprag 3 and the inner and outer rings 1, 2 is carbon steel for mechanical structure (S55C), while in the conventional case, the material for the sprag 3 and the inner and outer rings 1, 2 is bearing steel (SUJ2). The tests have been conducted in the environment of lubricatingoil containingmolybdenum, employing the one-way clutches in which the hardness of the contact faces between the sprag 3 and the inner and outer rings 1, 2 are varied stepwise from HRC45 to HRC65 respectively in the embodiment and in the conventional case, and a good result is evaluated as 'B' or 'A'. Particularly, the one-way clutch equal to calculation life or more is evaluated as 'A'. The other test samples in which a desired result has not been obtained is evaluated as 'C'.

In Fig. 6, steels having the hardness of HRC50 to 62.5 in the embodiment (carbon steel for mechanical structure: S55C) have shown the results equal to or more than the calculation life, and the especially favorable results have been obtained.

In the conventional case, because the chrome content in steel (bearing steel: SUJ2) is from 1.3 to 1. 6 weight %, molybdenum disulfide is likely to adhere to the surfaces of the sprag and the inner and outer rings 1, 2 in the environment of the lubricating oil containing molybdenum, and the coefficient of friction between them has been lowered. Consequently, slips have occurred between them, and the useful life has been shortened due to abrasion. Moreover, in steels having the hardness less than HRC50, many abrasions have occurred, because pressure on the contact faces between the sprag 3 and the inner and outer rings 1, 2 has become high.

From the foregoing, by setting the material for the sprag 3 and the inner and outer rings 1, 2 to be carbon steel (the chrome content is 0.30 weight % or less), and the hardness of the contact faces between them to be from HRC50 to HRC62.5, lowering of the coefficient of friction between the sprag 3 and the inner and outer rings 1, 2 canbe restrained. As the results, it is possible to prevent the useful life of the one-way clutch from being shortened due to abrasion caused by the slip.

## Claims

1. A one-way clutch comprising:
an inner ring (1) made of steel;
an outer ring (2) made of steel;
a plurality of sprags (3) made of steel and arranged between the inner and outer rings; and
a cage (5, 6) which holds the sprags at a predetermined interval in a circumferential direction, the one-way clutch being used in an environment of lubricating oil containing molybdenum,
**characterized in that** a chrome content in steel which is material for the sprags is 1.2 weight % or less.

2. Aone-wayclutch according to claim 1, wherein the chrome content in steel which is the material for the sprags is 0.30 weight % or less, and a hardness of the sprags on contact faces thereof with respect to the inner ring and the outer ring is from HRC50 to HRC62. 5.

3. A one-way clutch according to claim 1, wherein the sprags are made of carbon steel for mechanical structure or carbon tool steel.

4. A one-way clutch according to claim 1, wherein a chrome content in steel which is material for the inner ring and the outer ring is 0.30 weight % or less, and a hardness of the inner ring and the outer ring on the contact faces with respect to the sprags is from HRC50 to HRC62.5.

5. A one-way clutch according to claim 1, wherein the inner ring and the outer ring are made of carbon steel for mechanical structure or carbon tool steel.

6. A one-way clutch according to claim 1, wherein a chrome content in steel which is material for the inner ring and the outer ring is 1.2 weight % or less.

7. A one-way clutch according to claim 1, wherein the hardness of the sprags and the inner and outer rings on the respective contact faces between them is Hv700 or more.

## Patentansprüche

1. Einwegkupplung, umfassend:
einen Innenring (1) aus Stahl;
einen Außenring (2) aus Stahl;
eine Vielzahl von Spannern (3), die aus Stahl gefertigt sind und zwischen dem Innenring und dem Außenring angeordnet sind; und
ein Gehäuse (5, 6), das die Spanner mit einem vorbestimmten Abstand in der Umfangsrichtung hält, wobei die Einwegkupplung in einer Umgebung eines Schmieröls, das Molybdän enthält, verwendet wird,
**dadurch gekennzeichnet, dass** ein Chromanteil im Stahl, welcher das Material für die Spanner ist, 1,2 Gew.% oder weniger beträgt.

2. Einwegkupplung nach Anspruch 1, wobei der Chromanteil im Stahl, welcher das Material für die Spanner ist, 0,30 Gew.% oder weniger beträgt, und eine Härte der Spanner auf Kontaktflächen davon in Bezug auf den Innenring und den Außenring zwischen HRC50 und HRC62,5 liegt.

3. Einwegkupplung nach Anspruch 1, wobei die Spanner aus Kohlenstoffstahl für einen mechanischen Aufbau oder einem Kohlenstoffwerkzeugstahl gefertigt sind.

4. Einwegkupplung nach Anspruch 1, wobei der Chromanteil im Stahl, welcher das Material für den Innenring und den Außenring ist, 0,30 Gew.% oder weniger beträgt, und eine Härte des Innenrings und des Außenrings auf den Kontaktflächen in Bezug auf Spanner zwischen HRC50 und HRC62,5 liegt.

5. Einwegkupplung nach Anspruch 1, wobei der Innenring und der Außenring aus Kohlenstoffstahl für einen mechanischen Aufbau oder einem Kohlenstoffwerkzeugstahl gefertigt sind.

6. Einwegkupplung nach Anspruch 1, wobei ein Chromanteil im Stahl, welcher das Material für den Innenring und den Außenring ist, 1,2 Gew.% oder weniger beträgt.

7. Einwegkupplung nach Anspruch 1, wobei die Härte der Spanner und des Innen- und Außenrings auf den jeweiligen Kontaktflächen zwischen diesen Hv700 oder mehr beträgt.

## Revendications

1. Embrayage unidirectionnel comprenant :
une bague interne (1) fabriquée en acier ;
une bague externe (2) fabriquée en acier ;
une pluralité de sabots (3) fabriqués en acier et agencés entre les bagues interne et externe ; et
une cage (5, 6) qui retient les sabots suivant un intervalle prédéterminé dans une direction circonférentielle, l'embrayage unidirectionnel étant utilisé dans un environnement d'huile de lubrification contenant du molybdène,
**caractérisé en ce qu'**une teneur en chrome de l'acier qui est le matériau des sabots est inférieure ou égale à 1,2 % en poids.

2. Embrayage unidirectionnel selon la revendication 1, dans lequel la teneur en chrome de l'acier qui est le matériau composant les sabots est inférieure ou égale à 0,30 % en poids, et la dureté des sabots sur les faces de contact de ceux-ci par rapport à la bague interne et à la bague externe est comprise entre HRC 50 et HRC 62,5.

3. Embrayage unidirectionnel selon la revendication 1, dans lequel les sabots sont fabriqués en acier au carbone pour structure mécanique ou en acier à outils au carbone.

4. Embrayage unidirectionnel selon la revendication 1, dans lequel une teneur en chrome dans l'acier qui est le matériau composant la bague interne et la bague externe est inférieure ou égale à 0,30 % en poids, et la dureté de la bague interne et de la bague externe sur les faces de contact par rapport aux sabots est comprise entre HRC 50 et HRC 62,5.

5. Embrayage unidirectionnel selon la revendication 1, dans lequel la bague interne et la bague externe sont fabriquées en acier au carbone pour structure mécanique ou en acier à outils au carbone.

6. Embrayage unidirectionnel selon la revendication 1, dans lequel la teneur en chrome dans l'acier qui est le matériau composant la bague interne et la bague externe est inférieure ou égale à 1,2 % en poids.

7. Embrayage unidirectionnel selon la revendication 1, dans lequel la dureté des sabots et des bagues interne et externe sur les faces de contact respectives entre eux est supérieure ou égale à Hv 700.
